# EUROPEAN PATENT SPECIFICATION

(11) **EP 2 314 054 B1**
(45) Date of publication and mention of the grant of the patent: **25.07.2012**
(21) Application number: 09789424.0
(22) Date of filing: 15.01.2009
(51) Int. Cl.: H04M 1/02

(54) **PORTABLE COMMUNICATION DEVICE HAVING AN OPEN CHANNEL HINGE ASSEMBLY**
TRAGBARES KOMMUNIKATIONSGERÄT MIT EINER OFFENKANALSCHWENKBAUGRUPPE
DISPOSITIF DE COMMUNICATION PORTABLE DOTÉ D UN ENSEMBLE CHARNIÈRE À CANAL OUVERT

(30) Priority: 15.07.2008 US 173665
(43) Date of publication of application: 27.04.2011
(73) Proprietor: Sony Ericsson Mobile Communications AB, 221 88 Lund (SE)
(72) Inventor: DEMUYNCK, Randolph, C., Wake Forest North Carolina 27587 (US); HUNT, Charles, C., Wake Forest North Carolina 27587 (US)
(74) Representative: Ström & Gulliksson AB
(86) International application number: PCT/US2009/031116
(87) International publication number: WO 2010/008612

(56) References cited:
- EP-A- 1 710 986
- EP-A- 1 739 931
- WO-A-2006/092682
- WO-A-2007/078256
- US-A1- 2006 105 824
- US-A1- 2008 026 802
- US-A1- 2008 086 841

## Description

### TECHNICAL FIELD OF THE INVENTION

The present invention relates generally to portable communication devices, and more particularly, to a portable communication device having an open channel hinge assembly and a flex recoil system.

### DESCRIPTION OF RELATED ART

Portable communication devices, and in particular mobile telephones, are used for a wide variety of applications. For example, mobile phones are used not only for phone conversations and for sending/receiving messages, but also for browsing the internet, viewing multimedia content, such as movies or music, and for playing games, etc.

In general, the display screen on a mobile phone is limited by the size of the phone. As mobile phones are reduced in size, the surface area available for the display screen, functional keys and a keypad is reduced. In order to maximize the size of the display screen, some mobile devices are designed with a base and a display that is movable relative to the base. In these mobile phones, the keypad often is incorporated into the base and exposed only after opening/moving the display. Known mobile devices of this variety include clamshell devices, in which the display is connected to the base via a conventional rotational hinge, and slider devices, in which the display is slidable with respect to the base, for example, on a rail or a track.

WO 2006/092682 discloses a mobile electronic device having a relocatable display element. The mobile electronic device includes a first houing part, a second housing part, and a hinge element connecting the first housing part and the second housing part in a foldable manner.

WO 2007/078256 discloses a keypad arrangement for a mobile phone and the like. The mobile phone has multiple input options overlaid buttons is enabled to have a plurality of buttons being activated simultaneously for selecting an input option. the input buttons is distributed to two separate keypads at opposite sides of a screen so that two hand operation is facilitated.

US 2008/0086841 discloses a hinge mechanism for an electronic device. The hinge is a two-part hinge with a top tube on a top half of the device, a bottom tube on a bottom half of the device, and a hinge assembly in the top tube and the bottom tube. EP 1 710 986 discloses a folder-type portable communication device having sliding display unit. The portable communication device has a body, a folder which rotates about a hinge axis to be folded or unfolded with respect to the body, a sliding display unit which is folded or unfolded together with the folder with respect to the body and which can slide in a longitudinal direction of the folder so as to open and close a region of an inner surface of the body or the folder, and a hinge unit for pivotably connecting the folder to the body.

EP 1 739 931 discloses a portable terminal having slidable and foldable housings. The portable terminal includes a first housing, a second housing which is slidable on the first housing in a state such that it faces the first housing, for opening and closing a predetermined portion of an upper surface of the first housing, a third housing which is connected to the first housing to rotate in a direction away from a bottom surface of the first housing, for opening and closing a predetermined portion of the bottom surface of the first housing, and a hinge unit for connecting the first housing to the third housing.

US 2006/0105824 discloses a sliding-folding type portable communication apparatus. The sliding -folding type portable communication apparatus has a soft cover having a folding section, a hinge unit provided in the folding section, and a body coupled to the soft cover while facing one surface of the soft cover, the body sliding lengthwise along the soft cover and being opened/closed when the soft cover is extended/folded.

US 2008/0026802 discloses an electronic device having a single seam hinge. Disclosed are hinges with a single interface or single seam between two halves of the hinge, configured to route through the hinge a flexible circuit element to couple electronic circuitry in a first housing with electronic circuitry in a second housing. An axial shaft with an elongated slot is received by the two halves of the hinge.

### SUMMARY

To enhance functionality and versatility, a portable communication device is equipped with an open channel hinge assembly. The open channel hinge assembly hingedly couples a base assembly and a flip assembly such that the base assembly and the flip assembly are movable between closed and open positions. The open channel hinge assembly is configured to slidably support a main display for sliding over the base assembly and the flip assembly when the base and flip assemblies are in a fully open position.

In an additional embodiment, the portable communication device is equipped with a flex recoil system that supports flex circuitry to maintain electrical coupling between the slidable display and a printed circuit board assembly as the slidable display is moved over the base assembly and the flip assembly.

The provisions of an open channel hinge assembly and a flex recoil assembly allow for a mobile phone that has the look and feel of a larger phone with more display area and/or control area with a smaller footprint.

One aspect of the disclosed technology relates a portable communication device that includes a first assembly; a second assembly hingedly coupled to the first assembly, wherein the first and second assemblies are movable between a closed position and an open position in which the first and second assemblies are coplanar; and a third assembly coupled to the first and second assemblies and configured to slide over the first and second assemblies when the first and second assemblies are in an open position in which the first and second assemblies are coplanar. The first assembly and the second assembly are coupled by an open channel hinge assembly, wherein the open channel hinge assembly includes a hinge frame that defines a channel configured to slidably support the third assembly within the channel defined by the hinge frame.According to another embodiment, the third assembly is configured to be slidable between a first position over the first assembly, a second position partially over the first assembly and the second assembly, and a third position over the second assembly.

According to another embodiment, the portable communication device is configured to be closeable with the third assembly over the first assembly or over the second assembly.

According to another embodiment, the first assembly and the second assembly are coupled by an open channel hinge assembly, wherein the open channel hinge assembly includes a hinge frame that defines a channel configured to slidably support the third assembly.

According to another embodiment, the third assembly comprises a display assembly.

According to another embodiment, the first assembly and the second assembly comprise touch-sensitive input devices.

According to another embodiment, the touch-sensitive input devices are touch-input display devices.

According to another embodiment, the third assembly includes a display and the second assembly includes a printed circuit board assembly (PCBA) that is electrically coupled to the display by flex circuitry supported on a flex recoil assembly.

According to another embodiment, the flex recoil assembly is configured to maintain electrical coupling between the display and the PCBA as the display slides over the first assembly and over the second assembly.

According to another embodiment, the flex recoil assembly includes flex circuitry releasably wound on spring-loaded reel supported within a barrel housing, wherein the barrel housing defines a pair of slits through which the flex circuitry passes.

According to another embodiment, one end of the flex circuitry is coupled to the display and the other end of the flex circuitry is coupled to the PCBA.

According to another embodiment, the flex recoil assembly includes flex circuitry releasably wound on an outer surface of a cylindrical support.

According to another embodiment, the flex recoil assembly is housed below a portion of the open channel hinge assembly.

According to another embodiment, the open channel hinge assembly defines a cavity configured to support the flex recoil assembly.

According to another embodiment, the flex recoil assembly is configured to rotate independent of movement of the open channel hinge assembly.

According to another embodiment, the portable communication device is a mobile telephone.

Another aspect of the disclosed technology relates to a portable communication device that includes a first assembly; a second assembly hingedly coupled to the first assembly, wherein the first and second assemblies are movable between a closed position and an open position in which the first and second assemblies are coplanar; a display assembly coupled to the first and second assemblies and configured to slide over the first and second assemblies when the first and second assemblies are in an open position in which the first and second assemblies are coplanar; and a printed circuit board assembly (PCBA) housed within the second assembly, wherein the PCBA is electrically coupled to the display assembly via flex circuitry supported on a rotatable flex recoil assembly.

According to another embodiment, the flex recoil assembly includes flex circuitry releasably wound on spring-loaded reel supported within a barrel housing, wherein the barrel housing defines a pair of slits through which the flex circuitry passes.

According to another embodiment, the flex recoil assembly is recessed below the display assembly.

Another aspect of the disclosed technology relates to a portable communication device in which the first assembly is a first display assembly, and/or the second assembly is a a second display assembly.

These and further features of the present invention will be apparent with reference to the following description and attached drawings. In the description and drawings, particular embodiments of the invention have been disclosed in detail as being indicative of some of the ways in which the principles of the invention may be employed, but it is understood that the invention is not limited correspondingly in scope. Rather, the invention includes all changes, modifications and equivalents coming within the spirit and terms of the claims appended thereto.

Features that are described and/or illustrated with respect to one embodiment may be used in the same way or in a similar way in one or more other embodiments and/or in combination with or instead of the features of the other embodiments.

It should be emphasized that the term "comprises/comprising" when used in this specification is taken to specify the presence of stated features, integers, steps or components but does not preclude the presence or addition of one or more other features, integers, steps, components or groups thereof.

### BRIEF DESCRIPTION OF DRAWINGS

Many aspects of the invention can be better understood with reference to the following drawings. The components in the drawings are not necessarily to scale, emphasis instead being placed upon clearly illustrating the principles of the present invention. Likewise, elements and features depicted in one drawing may be combined with elements and features depicted in additional drawings. Moreover, in the drawings, like reference numerals designate corresponding parts throughout the several views.
FIG. 1 is a top view of an exemplary portable communication device, such as a mobile telephone in a closed position;
FIG. 2 is a top view of the mobile phone of claim 1 in an open position;
FIG. 3 is a top view of the mobile phone of claim 1 in another open position configuration;
FIG. 4 is a top view of the mobile phone of claim 1 in another open position configuration;
FIG. 5 is a side view of the mobile phone of claim 1 in an open position;
FIG. 6 is a top view of an open channel hinge frame assembly;
FIG. 7 is a perspective view of a portion of an open channel hinge frame assembly;
FIG. 8 is a perspective view of a portion of an exemplary mobile phone;
FIG. 9 is a perspective view of a portion of a closed mobile phone housing a flex recoil assembly;
FIG. 10 is a perspective view of a portion of an open mobile phone housing a flex recoil assembly;
FIG. 11 is an end view of the closed mobile phone of claim 9;
FIG. 12 is a diagrammatic illustration of a portion of the flex recoil assembly in accordance with one exemplary embodiment;
FIG. 13 is a diagrammatic illustration of a portion of the flex recoil assembly in accordance with one exemplary embodiment; and
FIG. 14 is a diagrammatic illustration showing the operation of the flex recoil assembly in accordance with one exemplary embodiment.

### DETAILED DESCRIPTION OF EMBODIMENTS

In the detailed description that follows, like components have been given the same reference numerals regardless of whether they are shown in different embodiments of the present invention. To illustrate the present invention in a clear and concise manner, the drawings may not necessarily be to scale and certain features may be shown in somewhat schematic form.

As referred to herein, the term "portable communication device" includes portable radio communication equipment. The term "portable radio communication equipment", which herein after is referred to as a mobile phone, a mobile device, a mobile radio terminal or a mobile terminal, includes all electronic equipment, including, but not limited to, mobile telephones, pagers, communicators, i.e., electronic organizers, smartphones, personal digital assistants (PDAs), or the like.

In the context of the illustrated embodiments, the portable communication device is primarily referred to as a mobile telephone or a mobile phone. The description and illustrations of the mobile telephone, however, are intended to serve as a non-limiting exemplary environment for the inventive concepts described herein, and it will be appreciated that the invention is not intended to be limited to a mobile telephone, but rather can be any type of electronic equipment.

Mobile phone designers struggle with phone size over function and convenience. In one respect, mobile phones having smaller footprints are desirable for their portability. Examples of such phones include phones having a clamshell form factor in which a top portion of the phone rotates between open and closed positions relative to the base, which typically includes a keypad. Another example of a phone having a smaller form factor is a "slider phone." Mobile phones with slider hinges typically include a keypad on the base that is exposed by sliding the display vertically and/or horizontally relatively to the base. Functional keys, typically located on the same surface as the display, are used for navigating menus and for initiating various functions on the device. Due to the location of the functional keys, the surface area available for the display screen is reduced, thus requiring the display screen to also be reduced in size. Furthermore, when the display is slid open, the functional keys are slid away from the user's hands, making them generally difficult to reach and/or inconvenient to use.

The smaller footprint associated with slider phones and clamshell phones often limits the phone's utility for multimedia applications, such as text messaging, surfing the web and/or gaming operations. Larger phones (e.g., phones having larger display areas and/or control areas) provide better functionality for multimedia applications, but are more cumbersome for user's to carry around.

The present disclosure recognizes shortcomings with conventional portable communication devices, including slider mobile phones and clamshell phones, as well as larger phones, and provides a portable communication device (e.g., a mobile phone) that includes first and second assemblies (e.g., base and flip assemblies having fixed displays) coupled by an open channel hinge assembly along with a third assembly (e.g., a main display) that is movable over the first and second assemblies. The movable display can be moved over the first or second fixed display when the phone is in the open position. In addition, the mobile phone is configured to be closed with the movable display over the first fixed display or the second fixed display.

The movement of the movable display is facilitated by a flex recoil assembly that allows the movable display to remain electrically coupled to a printed circuit board assembly while moving over the display areas of the base assembly and the flip assembly. As is discussed more fully below, the base and flip assemblies may includes displays configured as touch-sensitive displays to provide extra control space, thereby providing a mobile phone that has the look and feel of a larger phone with more display area and/or control area with the smaller footprint often associated with slider and/or clamshell phones.

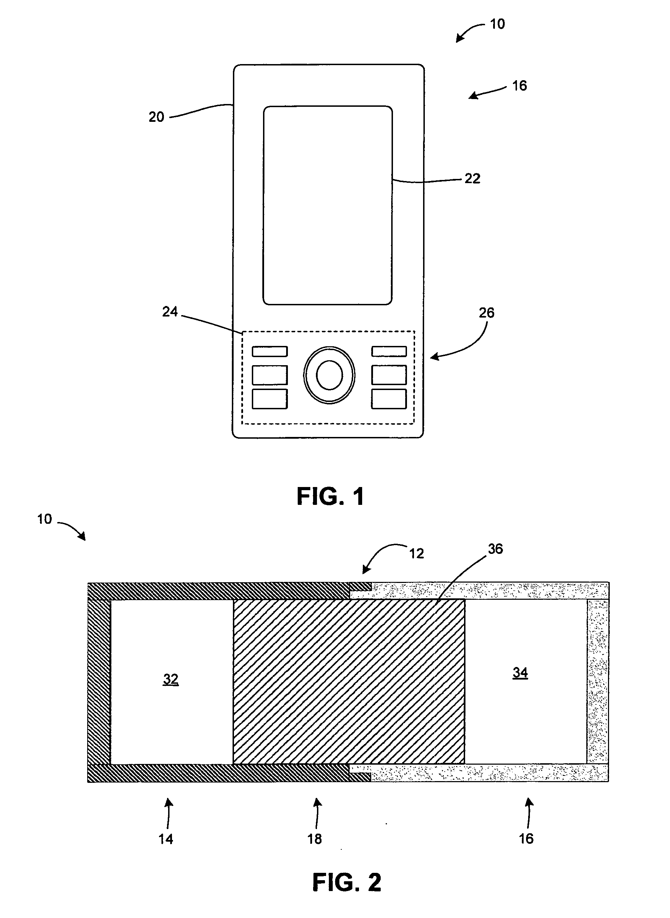

Referring initially to FIG. 1, an exemplary embodiment of a portable communication device 10 (e.g., a mobile phone, mobile terminal or the like) is shown as it would appear when operating in what is conventionally referred to as a "standby" mode. As is described more fully below, the mobile phone 10 includes an open channel hinge assembly 12 (also referred to simply as a hinge assembly). The open channel hinge assembly is configured to hingedly couple a first assembly 14 (e.g., a base assembly or a first display assembly) and a second assembly 16 (e.g., a flip assembly or a second display assembly). Further, the open channel hinge assembly 12 is configured to facilitate sliding motion of a third assembly 18 (e.g., a movable display assembly or a main display) where the third assembly 18 is movable over the first and second assemblies when they are in an open position or configuration (e.g., open substantially flat). The open channel hinge assembly 12 is coupled to and provides or otherwise facilitates relative movement between the base assembly 14 and the flip assembly 16, as well as movement of the main display assembly 18 over the base assembly 14 and the flip assembly 16.

In the illustrated exemplary embodiment, FIG. 1 shows a top portion of the flip assembly 16 that would be exposed when the mobile phone is in a closed configuration. As shown, the top portion 20 of the flip assembly 16 includes an outer display 22, for example, a display that may be viewed when the phone is in a closed position and/or in a standby mode. In addition, the top portion 20 of the flip assembly 16 may include or otherwise define a touch-sensitive input area 24 (e.g., a touch input display or other touch-input control area). In the illustrated exemplary embodiment, the touch-sensitive area 24 is configured to provide functional and/or navigational keys 26. It will be appreciated, that in an alternative embodiment, the top portion of the first assembly may be equipped without an outer display and/or without a touch-sensitive input area without departing from the scope of the present invention.

The functional and/or navigational keys 26 may provide for a variety of user input operations. For example, the functional keys 26 typically include special function keys, such as a "call send" key for initiating or answering a call, and a "call end" key for ending or "hanging up" a call. Special function keys also may include menu navigation keys, for example, for navigating through a menu displayed on the display(s) to select different telephone functions, profiles, settings, etc., as is conventional. Other navigational keys or controls may include directional keys (e.g., up, down, left, and right) to highlight different links, or icons, or to navigate text or other documents, etc. The navigational controls 24 also may be in the form of a roller ball or navigational ball, as will be appreciated. Other keys associated with the mobile telephone may include a volume key, an audio mute key, an on/off power key, a web browser launch key, a camera key and the like. The navigational keys may be embodied as "hard keys" or "soft keys" implemented on a touch-sensitive input device.

The outer display 22 (e.g., a touch screen) is configured to display information to a user, such as, operating state, time, telephone numbers, contact information, menus, etc. The user also can view and utilize various features and functions related to the various operating states of the mobile phone 10 on the display 22. The display 22 also may be used to visually display content received by the mobile telephone 10 and/or retrieved from a memory of the mobile telephone 10. For example, the user can watch movies, play video games, and browse the internet, etc., on the screen. Such audio/video materials may be stored on memory within the phone or accessed from remote servers, as will be appreciated.

As shown in FIGS. 2-4, and described more fully below, the mobile phone 10 includes a first assembly 14 (e.g., a base assembly) and a second assembly 16 (e.g., a flip assembly) that are hingedly coupled by the open channel hinge assembly 12 such that the flip assembly 16 may be rotated relative to the base assembly 14 between a closed position (shown in FIG. 1) and an open position (shown in FIGS. 2-4) where the base assembly 14 and the flip assembly 16 are substantially coplanar. In addition, the open channel hinge assembly 12 is configured, along with the base assembly and the flip assembly, to define a channel or slot in which the third assembly 18 (e.g., a main display assembly) may be slidably supported.

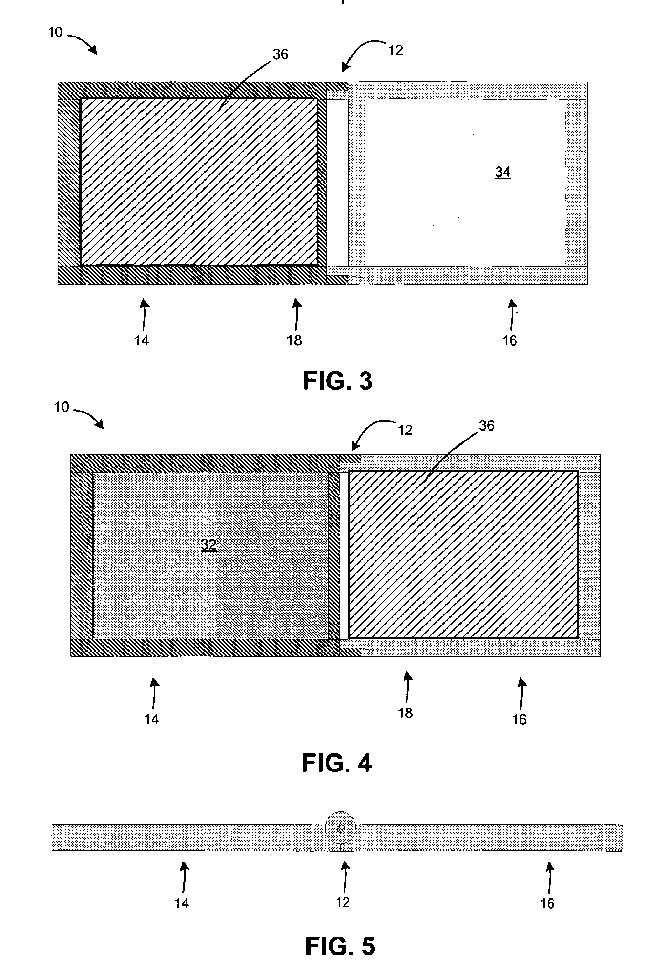

In this configuration, the main display assembly 18 may be slid or otherwise translated in a variety of positions over or partially over the base assembly and the flip assembly when the base and flip assemblies are in a fully open (e.g., flat) configuration. For example, FIG. 2 shows the mobile phone 10 with the base and flip assemblies in a fully open configuration and the main display assembly slid over to a position partially overlapping the base and flip assemblies. FIG. 3 shows the mobile phone with the main display assembly substantially over the base assembly, while FIG. 4 shows the main display assembly slid substantially over the flip assembly. As is described more fully below, the configuration of the open channel hinge assembly allows the mobile phone to be closed with the main display assembly 18 disposed over either the base assembly or the flip assembly. This provides numerous advantages in terms of flexibility and overall usability of the mobile phone design in that the phone may be opened and operated regardless of the way the user picks up the phone (e.g., regardless of whether the user opens the base assembly relative to the flip assembly or the flip assembly relative to the base assembly with the main display disposed over the base assembly or the flip assembly).

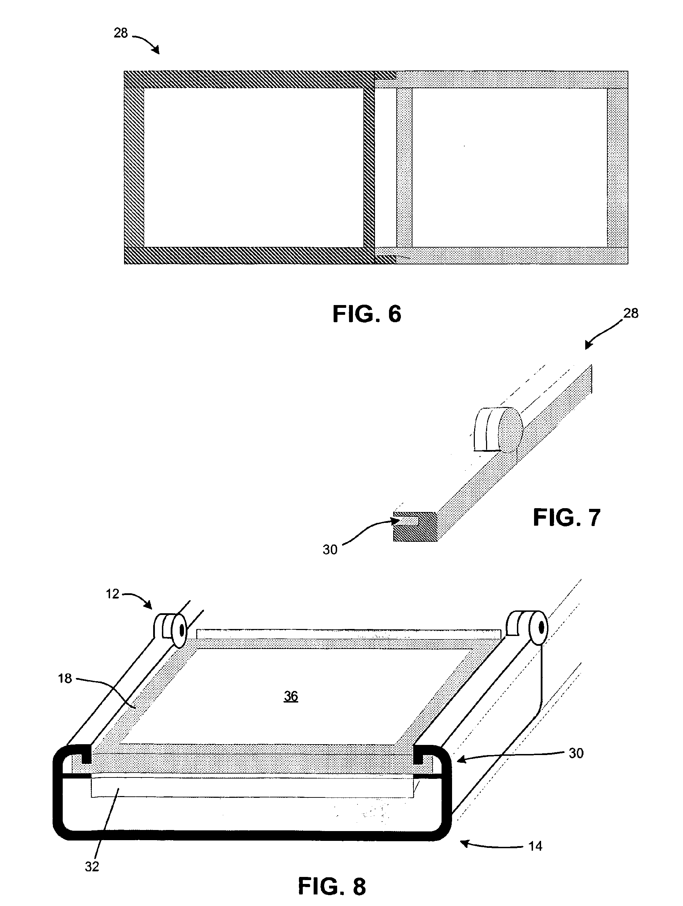

Turning now to FIGS. 5-8, the open channel hinge assembly may be constructed to include a hinge frame 28 (FIG. 6) made up of two pieces that are hingedly connected, where the pieces cooperate to define a slot or channel 30 in which the main display 18 may be slidably supported. In the exemplary embodiment illustrated in FIGS. 2-4, the base assembly includes a first touch-sensitive input device 32 (e.g., a touch-sensitive display or touch screen) while the flip assembly includes another touch-sensitive input device 34 (e.g., a touch-sensitive display or touch screen). The main display assembly may also include a touch-sensitive display or touch screen 36. Alternatively, the third assembly may simply include a conventional display.

In one embodiment, touch-sensitive input devices 32, 34 and 36 are touch-sensitive displays or touch screens. Exemplary touch screens include thin film transistor (TFT), LCD screens. It will be appreciated that different screens, such as larger or smaller screens, or other thin screen technology may be utilized without departing from the scope of the present invention.

If the mobile phone includes touch screens, the screens may be navigated by using a stylus or by otherwise touching the surface of the screen to select various functions and/or input information or data into the phone. As is described more fully below, keys or key-like functionality also may be embodied as a touch screen on the display screen, and it will be appreciated that in such embodiments, the functional and/or navigational keys may be incorporated into the touch screen to incorporate a larger screen on the display.

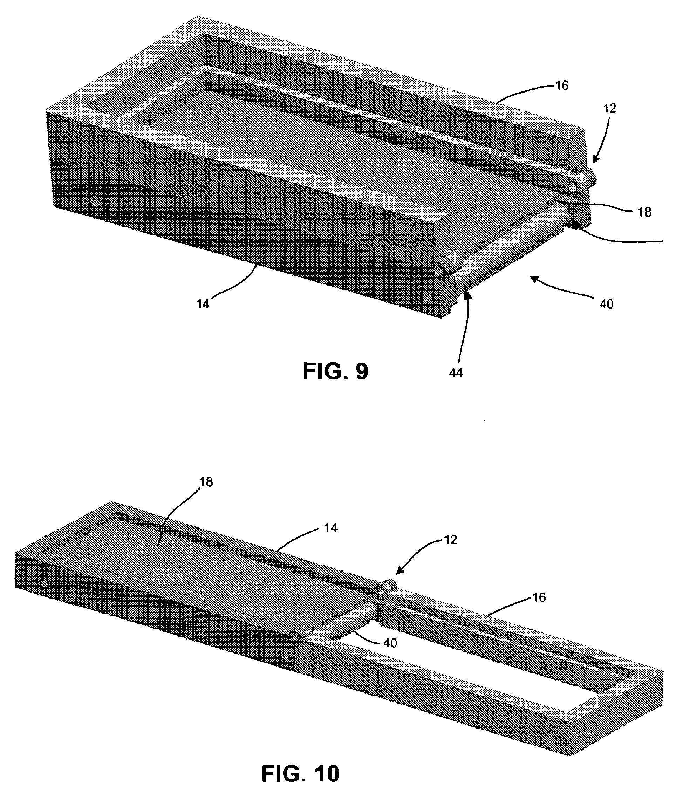

Turning now to FIGS. 9-14, the mobile phone is shown including a flex recoil assembly 40 for electrically coupling the main or sliding display 36 to appropriate circuitry, such as a main printed circuit board assembly (PCBA) 42. The PCBA 42 may include the electronics, memory, and circuitry, etc. necessary for operating the mobile phone, including conventional call circuitry that enables the mobile telephone to establish a call or otherwise exchange signals with other devices, such as other mobile devices, internet web servers, media servers, or the like. The call circuitry also may be responsible for transmitting and receiving text messages, e-mails, or text documents. Additionally, the mobile phone 10 may include circuitry for browsing the internet, playing or viewing audio/visual materials, such as picture, music or video files and for gaming operations. Circuitry that controls touch-sensitive input devices 32, 34 and 36 also is included.

In one embodiment, the display control circuitry dynamically adapts the displayed output of the touch-sensitive input devices 32, 34, and 36 depending upon the mode in which the phone is operating and how the phone is opened. As is discussed more fully below, the mobile phone can be configured to operate in both portrait and landscape orientations depending upon the relative positions of the base assembly 14, the flip assembly 16 and the sliding assembly 18.

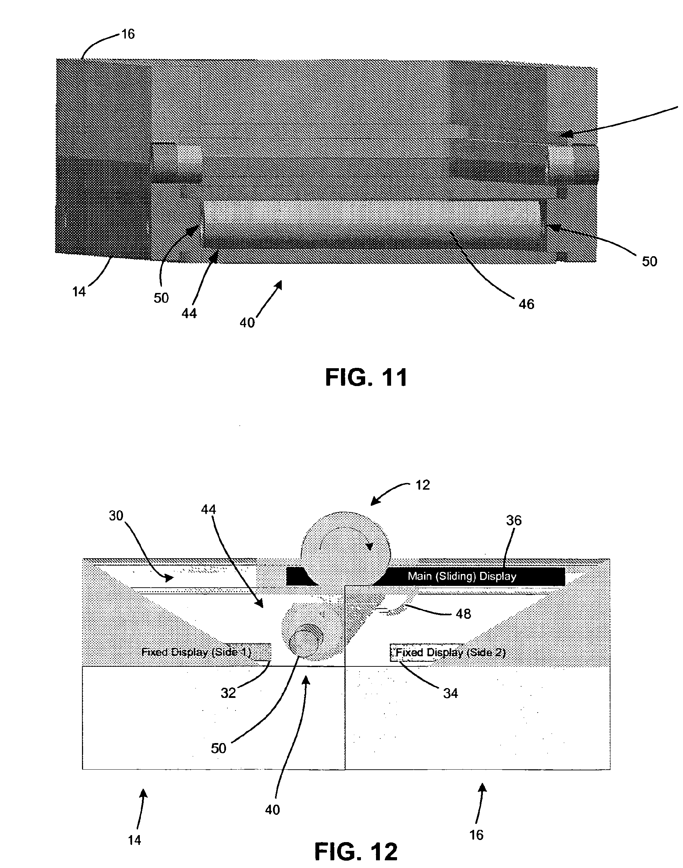

As can be seen from the illustrated embodiments, the open channel hinge assembly 12 and the mobile phone in general are configured to house or otherwise support the flex recoil assembly 40. In one embodiment, the flex recoil assembly 40 is supported or otherwise housed within a cavity 44 defined by the hinge frame assembly. As shown in FIGS. 12-14, the flex recoil assembly 40 may be configured as a spring-loaded real housed disposed within a barrel or cylindrical support 46 in which flex circuitry 48 is wound and housed.

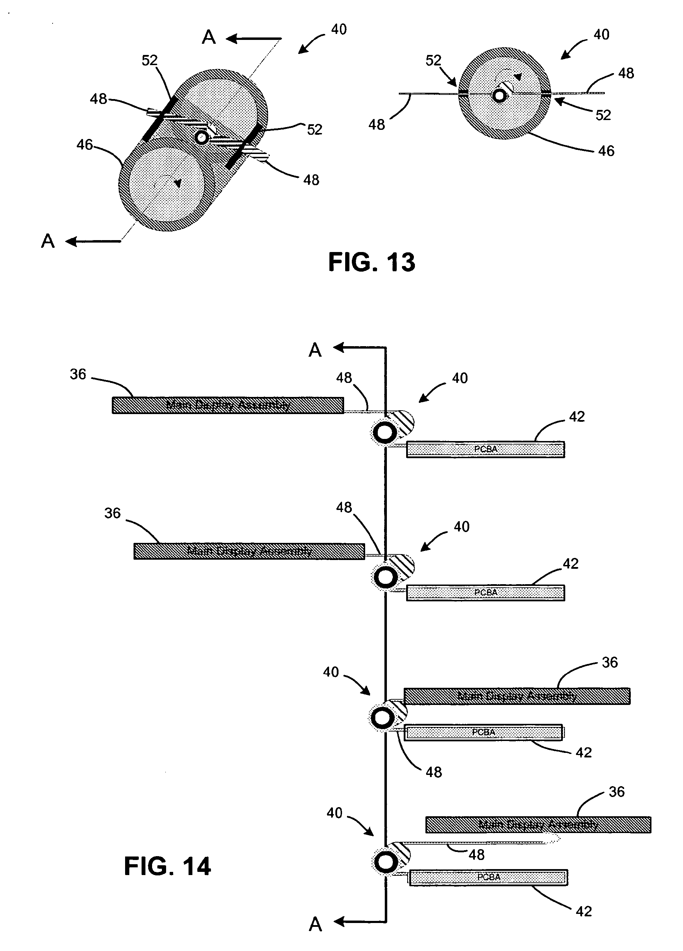

In one preferred embodiment, the barrel of the flex recoil assembly is retained within the hinge frame assembly by a pair of retaining rings 50 that support the barrel, but allow the barrel to rotate asynchronously or independently of the open channel hinge assembly itself. As shown in FIG. 13, the flex recoil assembly may include or otherwise define a pair of slits or openings 52 within the barrel such that the flex circuitry 48 may be passed through the slits to be electrically coupled to the main display assembly and the printed circuit board assembly, respectively. In one preferred embodiment, the barrel turns freely between the hinge body and the internal flex circuitry is spring loaded such that it rewinds in the opposite direction. In this configuration, the barrel surface is configured to be facing the top such that the flex circuitry is not exposed to the user. Alternatively, appropriate cosmetic coverings may be used to prevent the flex circuitry from being exposed to the user. As shown in the sequence depicted in FIG. 14, as the main display assembly 36 moves from a first side (e.g., from over the base assembly) to a second side (e.g., to over the flip assembly) the flex circuitry 48 is released such that the display 36 can travel freely. In the opposite direction, the flex circuitry is rewound. Rewinding may be achieved by using a spring to assist the recoiling action.

One method for releasing and rewinding the flex circuitry is to provide slots 52 or other openings in the barrel portion of the flex recoil assembly. This allows the flex circuitry to coil up inside the barrel. The ends of the flex circuitry can then enter and leave the barrel through the slots. One end of the flex circuitry is attached to the main display and the other end of the flex circuitry is attached to the PCBA. The flex recoil assembly is spring loaded in one direction (e.g., it winds up) when the display travels from side 1 to side 2, the flex circuitry is released from the recoil system in the direction of travel. Moving this direction winds the internal spring such that when the display is moved form side 2 to side 1, the spring rewinds the flex.

In an alternative embodiment, the flex circuitry may be wound around the external surface of the barrel or cylinder (and covered with appropriate cosmetic assemblies). In this embodiment, however, the operations of releasing and rewinding the flex circuitry may be functionally the same as that described above.

It will be appreciated that while in the illustrated embodiments, the PCBA is shown disposed on the flip assembly side of the mobile phone, the PCBA may also be disposed on the base assembly side of the phone without departing from the scope of the present invention. Further, it will be appreciated that other flex circuitry may be used to couple the two fixed touch input devices or displays to the printed circuit board assembly. Alternatively, the printed circuit board assembly may be connected to auxiliary printed circuit board assemblies associated with the base assembly and the top assembly by suitable flex circuitry.

It will be appreciated that multiple use cases (and associated phone configurations) may be achieved by the design described above. In one embodiment, the phone includes three distinct displays 32, 34 and 36 on the "inside" of the mobile phone, each with a touch-sensitive input portion so that they could be used or otherwise configured as input devices. When in a normal flip open mode, the main display 36 within sliding assembly 18 may be configured to function as a typical keypad (e.g., alphanumeric keypad and/or QWERTY keypad) and display 32 within base 14 or display 34 within the flip is hidden. When the mobile phone is transitioned to the web/multimedia mode (e.g., by opening the flip assembly and sliding the intermediate portion relative to the base) all three touch-sensitive input surfaces 32, 34 and 36 are exposed, and display 36 may switch to function as the main display, while displays 32 and 34 are configured to operate as input devices. In one embodiment, the transition of the main display from keypad mode to main display mode may be triggered by an electromechanical switch that is activated upon sliding movement of sliding assembly to reveal touch-sensitive input device 34. In this embodiment, the user may hold the mobile device with both hands in a landscape mode as the user navigates/operates the device with his/her thumbs. Of course other use cases and configurations may be realized without departing from the scope of the present invention.

The provision of a mobile phone having a base assembly, a flip assembly and a main display assembly coupled by an open channel hinge assembly provides a mobile phone having enhanced functionality and versatility. Further, the provision of a flex recoil assembly electrically coupling the movable main display assembly to a printed circuit board assembly also provides for a mobile phone in which a moved display may be moved freely between both halves of a clamshell mobile phone. This mechanism also allows for the display to be located in either half of the phone when the phone is in a closed position.

As such, the provision of an open channel hinge assembly along with a flex recoil assembly provides a conveniently-sized form factor or footprint of a phone along with the enhanced space/features and/or display space/features found in phones having larger form factors. Stated differently, the above-described mobile phone provides the look and feel of a larger phone with more display area and/or control area with the smaller footprint often associated with a clamshell phone.

In addition, the provision of a open channel hinge assembly that couples a base assembly, main display and flip assembly (with the base assembly, main display and/or flip assembly having touch-input devices) provides for a versatile mobile phone that may be operated in a first mode (e.g., in a portrait orientation with the flip assembly or the base assembly being covered by the movable display) for calling and simple messaging operations, and a second mode (e.g., in a landscape orientation) for web surfing, gaming and/or other multimedia operations. For example, in one embodiment, the flip assembly may be opened and the main display may be slid to reveal touch-sensitive input devices (and possibly triggering a transition to a multimedia mode), whereby touch-sensitive device functions as the main display and touch-sensitive devices are configured as touch-sensitive control interfaces. In this configuration, the phone can operate in a "balanced mode" where a user can hold the device with both hands and in a landscape mode having control areas on both sides of a relatively-centered main display. Other modes of operation may be realized without departing from the scope of the present invention.

Although the invention has been shown and described with respect to a certain preferred embodiment or embodiments, it is obvious that equivalent alterations and modifications will occur to others skilled in the art upon the reading and understanding of this specification and the annexed drawings. In particular regard to the various functions performed by the above described elements (components, assemblies, devices, compositions, etc.), the terms (including a reference to a "means") used to describe such elements are intended to correspond, unless otherwise indicated, to any element which performs the specified function of the described element (i.e., that is functionally equivalent), even though not structurally equivalent to the disclosed structure which performs the function in the herein illustrated exemplary embodiment or embodiments of the invention. In addition, while a particular feature of the invention may have been described above with respect to only one or more of several illustrated embodiments, such feature may be combined with one or more other features of the other embodiments, as may be desired and advantageous for any given or particular application.

## Claims

1. A portable communication device (10) comprising:
a first assembly (14; 16);
a second assembly (16; 14) hingedly coupled to the first assembly (14; 16),
wherein the first and second assemblies (14; 16) are movable between a closed position and an open position in which the first and second assemblies (14; 16) are coplanar; and
a third assembly (18) coupled to the first and second assemblies (14; 16) and configured to slide over the first and second assemblies (14; 16) when the first and second assemblies (14; 16) are in an open position in which the first and second assemblies (14; 16) are coplanar; **characterized in that**
the first assembly and the second assembly are coupled by an open channel hinge assembly, wherein the open channel hinge assembly includes a hinge frame that defines a channel configured to slidably support the third assembly within the channel defined by the hinge frame.

2. The portable communication device of claim 1, wherein the third assembly is configured to be slidable between a first position over the first assembly, a second position partially over the first assembly and the second assembly, and a third position over the second assembly.

3. The portable communication device of claim 2, wherein the portable communication device is configured to be closeable with the third assembly over the first assembly or over the second assembly.

4. The portable communication device of claim 1, wherein the third assembly comprises a display assembly.

5. The portable communication device of claim 4, wherein the first assembly and the second assembly comprise touch-sensitive input devices.

6. The portable communication device of claim 5, wherein the touch-sensitive input devices are touch-input display devices.

7. The portable communication device of claim 1, wherein the third assembly includes a display and the second assembly includes a printed circuit board assembly (PCBA) that is electrically coupled to the display by flex circuitry supported on a flex recoil assembly.

8. The portable communication device of claim 7, wherein the flex recoil assembly is configured to maintain electrical coupling between the display and the PCBA as the display slides over the first assembly and over the second assembly.

9. The portable communication device of claim 7, wherein the flex recoil assembly includes flex circuitry releasably wound on spring-loaded reel supported within a barrel housing, wherein the barrel housing defines a pair of slits through which the flex circuitry passes.

10. The portable communication device of claim 9, wherein one end of the flex circuitry is coupled to the display and the other end of the flex circuitry is coupled to the PCBA.

11. The portable communication device of claim 7, wherein the flex recoil assembly includes flex circuitry releasably wound on an outer surface of a cylindrical support.

12. The portable communication device of claim 10, wherein the flex recoil assembly is housed below a portion of the open channel hinge assembly.

13. The portable communication device of claim 10, wherein the open channel hinge assembly defines a cavity configured to support the flex recoil assembly.

14. The portable communication device of claim 10, wherein the flex recoil assembly is configured to rotate independent of movement of the open channel hinge assembly.

15. The portable communication device of claim 1, wherein the portable communication device is a mobile telephone.

16. The portable communication device (10) according to any one of the claims 1 to 5, and 7 to 15, wherein the first assembly (14;15) is a first display assembly (14; 16), and/or the second assembly (16;14) is a second display assembly (16; 14).

## Patentansprüche

1. Tragbares Kommunikationsgerät (10), umfassend:
eine erste Baugruppe (14; 16);
eine zweite Baugruppe (16; 14), die klappbar an die erste Baugruppe (14; 16) gekoppelt ist, wobei die ersten und zweiten Baugruppen (14; 16) zwischen einer geschlossenen Position und einer offenen Position, in der die ersten und zweiten Baugruppen (14; 16) koplanar sind, bewegbar sind; und
eine dritte Baugruppe (18), die an die ersten und
zweiten Baugruppen (14; 16) gekoppelt ist und die eingerichtet ist zum Gleiten über die ersten und zweiten Baugruppen (14; 16), wenn die ersten und zweiten Baugruppen (14; 16) in einer offenen Position sind, in der die ersten und zweiten Baugruppen (14; 16) koplanar sind; **dadurch gekennzeichnet, dass**
die erste Baugruppe und die zweite Baugruppe durch eine Offenkanalklappbaugruppe gekoppelt sind, wobei die Offenkanalklappbaugruppe einen Klapprahmen beinhaltet,
der einen Kanal definiert, der eingerichtet ist zum gleitenden Stützen der dritten Baugruppe innerhalb des durch den Klapprahmen definierten Kanals.

2. Tragbares Kommunikationsgerät nach Anspruch 1, wobei die dritte Baugruppe eingerichtet ist, zwischen einer ersten Position über der ersten Baugruppe, einer zweiten Position teilweise über der ersten Baugruppe und der zweiten Baugruppe, und einer dritten Position über der zweiten Baugruppe gleitbar zu sein.

3. Tragbares Kommunikationsgerät nach Anspruch 2, wobei das tragbare Kommunikationsgerät eingerichtet ist, mit der dritten Baugruppe über der ersten Baugruppe oder über der zweiten Baugruppe schließbar zu sein.

4. Tragbares Kommunikationsgerät nach Anspruch 1, wobei die erste Baugruppe eine Anzeigebaugruppe umfasst.

5. Tragbares Kommunikationsgerät nach Anspruch 4, wobei die erste Baugruppe und die zweite Baugruppe berührungsempfindliche Eingabegeräte umfassen.

6. Tragbares Kommunikationsgerät nach Anspruch 5, wobei die berührungsempfindlichen Eingabegeräte Eingabeanzeigegeräte sind.

7. Tragbares Kommunikationsgerät nach Anspruch 1, wobei die dritte Baugruppe eine Anzeige beinhaltet und die zweite Baugruppe eine Printplatinen-Baugruppe (PCBA) beinhaltet, die elektrisch mit der Anzeige durch einen flexiblen Schaltkreis gekoppelt ist, der durch eine flexible Rückstoßbaugruppe gestützt ist.

8. Tragbares Kommunikationsgerät nach Anspruch 7, wobei die flexible Rückstoßbaugruppe eingerichtet ist zum Beibehalten einer elektrischen Kopplung zwischen der Anzeige und der PCBA, wenn das Display über die erste Baugruppe und über die zweite Baugruppe gleitet.

9. Tragbares Kommunikationsgerät nach Anspruch 7, wobei die flexible Rückstoßbaugruppe einen flexiblen Schaltkreis beinhaltet, der ablösbar auf eine federngespannte Aufrollung gewickelt ist, die innerhalb eines Trommelgehäuses aufgenommen ist, wobei das Trommelgehäuse ein Paar von Schlitzen definiert, durch welche der flexible Schaltkreis läuft.

10. Tragbares Kommunikationsgerät nach Anspruch 9, wobei ein Ende des flexiblen Schaltkreises an die Anzeige gekoppelt ist und das andere Ende des flexiblen Schaltkreises an die PCBA gekoppelt ist.

11. Tragbares Kommunikationsgerät nach Anspruch 7, wobei die flexible Rückstoßbaugruppe einen flexiblen Schaltkreis beinhaltet, der ablösbar auf einer äußeren Oberfläche eines zylindirschen Trägers gewickelt ist.

12. Tragbares Kommunikationsgerät nach Anspruch 10, wobei die flexible Rückstoßbaugruppe unterhalb eines Teils der Offenkanalklappbaugruppe untergebracht ist.

13. Tragbares Kommunikationsgerät nach Anspruch 10, wobei die Offenkanalklappbaugruppe einen Hohlraum definiert, der zum Tragen der flexiblen Rückstoßbaugruppe eingerichtet ist.

14. Tragbares Kommunikationsgerät nach Anspruch 10, wobei die flexible Rückstoßbaugruppe zum Rotieren unabhängig von einer Bewegung der Offenkanalklappbaugruppe eingerichtet ist.

15. Tragbares Kommunikationsgerät nach Anspruch 1, wobei das tragbare Kommunikationsgerät ein Mobiltelefon ist.

16. Tragbares Kommunikationsgerät (10) nach einem der Ansprüche 1 bis 5, und 7 bis 15, wobei die erste Baugruppe (14; 15) eine erste Anzeigebaugruppe (14; 16) ist, und/oder die zweite Baugruppe (16; 14) eine zweite Anzeigebaugruppe (16; 14) ist.

## Revendications

1. Dispositif de communication portatif (10), comprenant :
un premier ensemble (14 ; 16) ;
un deuxième ensemble (16 ; 14), relié par une charnière au premier ensemble (14 ; 16), les premier et deuxième ensembles (14 ; 16) pouvant se déplacer entre une position fermée et une position ouverte, dans lesquelles les premier et deuxième ensembles (14 ; 16) sont coplanaires ; et
un troisième ensemble (18), relié aux premier et deuxième ensembles (14 ; 16) et configuré pour coulisser sur les premier et deuxième ensembles (14 ; 16) lorsque les premier et deuxième ensembles (14 ; 16) sont dans une position ouverte dans laquelle les premier et deuxième ensembles (14 ; 16) sont coplanaires ;
**caractérisé en ce que** :
le premier ensemble et le deuxième ensemble sont reliés par un ensemble de charnière à canal ouvert, l'ensemble de charnière à canal ouvert comprenant un cadre de charnière qui définit un canal configuré pour porter de manière coulissante le troisième ensemble, dans le canal défini par le cadre de charnière.

2. Dispositif de communication portatif selon la revendication 1, dans lequel le troisième ensemble est configuré de manière à pouvoir coulisser entre une première position, au-dessus du premier ensemble, une deuxième position partiellement au-dessus du premier ensemble et du deuxième ensemble et une troisième position au-dessus du deuxième ensemble.

3. Dispositif de communication portatif selon la revendication 2, dans lequel le dispositif de communication portatif est configuré de manière à pouvoir être refermé lorsque le troisième ensemble est au-dessus du premier ensemble ou du deuxième ensemble.

4. Dispositif de communication portatif selon la revendication 1, dans lequel le troisième ensemble comprend un ensemble d'affichage.

5. Dispositif de communication portatif selon la revendication 4, dans lequel le premier ensemble et le deuxième ensemble constituent des dispositifs tactiles de saisie.

6. Dispositif de communication portatif selon la revendication 5, dans lequel les dispositifs tactiles de saisie sont des dispositifs tactiles d'affichage.

7. Dispositif de communication portatif selon la revendication 1, dans lequel le troisième ensemble comprend un écran d'affichage et le deuxième ensemble comprend un ensemble de carte de circuits imprimés (PCBA) qui est relié électriquement à l'écran d'affichage par un ensemble de circuits flexibles supportés par un ensemble de rappel flexible.

8. Dispositif de communication portatif selon la revendication 7, dans lequel l'ensemble de rappel flexible est configuré pour maintenir la connexion électrique entre l'écran d'affichage et l'ensemble de carte de circuits imprimés lorsque l'écran d'affichage coulisse au-dessus du premier ensemble et du deuxième ensemble.

9. Dispositif de communication portatif selon la revendication 7, dans lequel l'ensemble de rappel flexible comprend un ensemble de circuits flexibles embobiné de manière amovible sur une bobine chargée par ressort qui est portée dans un boîtier en forme de barillet, le boîtier en forme de barillet définissant une paire de fentes au travers desquelles passe l'ensemble de circuits flexibles.

10. Dispositif de communication portatif selon la revendication 9, dans lequel une extrémité de l'ensemble de circuits flexibles est reliée à l'écran d'affichage et l'autre extrémité de l'ensemble de circuits flexibles est reliée à l'ensemble de carte de circuits imprimés.

11. Dispositif de communication portatif selon la revendication 7, dans lequel l'ensemble de rappel flexible comprend un ensemble de circuits flexibles embobiné de manière amovible sur une surface extérieure d'un support cylindrique.

12. Dispositif de communication portatif selon la revendication 10, dans lequel l'ensemble de rappel flexible est logé au-dessous d'une partie de l'ensemble de charnière à canal ouvert.

13. Dispositif de communication portatif selon la revendication 10, dans lequel l'ensemble de charnière à canal ouvert définit une cavité configurée pour supporter l'ensemble de rappel flexible.

14. Dispositif de communication portatif selon la revendication 10, dans lequel l'ensemble de rappel flexible est configuré pour tourner indépendamment du mouvement de l'ensemble de charnière à canal ouvert.

15. Dispositif de communication portatif selon la revendication 1, dans lequel le dispositif de communication mobile est un téléphone mobile.

16. Dispositif de communication portatif (1) selon l'une quelconque des revendications 1 à 5 et 7 à 15, dans lequel le premier ensemble (14 ; 15) est un premier ensemble d'affichage (14 ; 16) et/ou le deuxième ensemble (16 ; 14) est un deuxième ensemble d'affichage (16 ; 14).
